# EUROPÄISCHE PATENTSCHRIFT

(11) **EP 1 014 050 B1**
(45) Veröffentlichungstag und Bekanntmachung des Hinweises auf die Patenterteilung: **14.02.2007**
(21) Anmeldenummer: 99250419.1
(22) Anmeldetag: 29.11.1999
(51) Int. Cl.: G01G 19/414, G07B 17/00

(54) **Verfahren und Anordnung zur Steuerung einer dynamischen Waage**
Method and device for controlling a dynamic weighing apparatus
Procédé et dispositif pour contrôler une balance dynamique

(30) Priorität: 18.12.1998 DE 19860296
(43) Veröffentlichungstag der Anmeldung: 28.06.2000
(73) Patentinhaber: Francotyp-Postalia GmbH, 16547 Birkenwerder (DE)
(72) Erfinder: Hübler, Uwe, 12627 Berlin (DE); Kunde, Christoph, 13469 Berlin (DE)

(56) Entgegenhaltungen:
- EP-A- 0 372 726
- GB-A- 2 195 312
- US-A- 4 935 078
- US-A- 4 956 782

## Beschreibung

Die Erfindung betrifft ein Verfahren zur Steuerung einer dynamischen Waage, gemäß des Oberbegriffs des Anspruchs 1 und eine Anordnung, zur Durchführung des Verfahrens gemäß des Oberbegriffs des Anspruchs 8. Die Lösung bezweckt insbesondere die schnelle Mischpostverarbeitung in einer Frankiereinrichtung. Das Verfahren ist für Anwender von Postverarbeitungssystemen mit einer dynamischen Waage und portoberechnenden Frankiermaschine bzw. mit dynamischen Portorechnerwaagen und Frankiereinrichtungen geeignet.

Aus der US 4,956,782, der GB 22 35 656 A und der EP 514 107 B1 ist ein halbdynamisches Wiegen bekannt. Besonders bei großen und schwer zu wiegenden Poststücken wird der Transport unterbrochen. In Abhängigkeit von den Abmaßen des Briefes wird die Transportgeschwindigkeit verringert.

Zur schnellen Postverarbeitung in einer Frankiermaschine wurde im US 49 35 078 (EP 615 212 B1, EP 615 213 B1) eine Zeitsteuerung gemäß eines vom Benutzer gewählten Betriebsmodus für die Benutzerstationen vorgeschlagen. Die stromaufwärts angeordnete Benutzerstation kann eine Waage sein und die stromabwärts angeordnete Benutzerstation ist die Frankiermaschine. Durch Sensoren und die Steuerung der stromaufwärts angeordneten Benutzerstation wird die Brieflänge ermittelt und zur Frankiermaschine übertragen. Letztere steuert die vorgeschaltete dynamische Waage, so daß die Brieftransportgeschwindigkeit in Abhängigkeit der Brieflänge herabgesetzt wird. Der Nachteil ist der verringerte Durchsatz bei allen langen Briefen. Solche Waagen benötigen eine Änderung der Steuerung der Frankiermaschine. Bei hoher Taktleistung besteht die Gefahr von Briefstaus.

Weitere bekannte Waagen von der Firma GFI sind dynamische Waagen, die ein Aussteuerfach für falsch gewogene Briefe benötigen. Somit werden diese falsch gewogenenen Briefe zwar transportiert, bleiben jedoch unfrankiert. Ursache für ein falsches Wiegen sind im wesentlichen eine unruhige Umgebung und daß der Briefschwerpunkt, insbesondere bei langen Briefformaten zu spät auf die Waage kommt, so daß die reine Wiegezeit zu kurz wird. Diese Briefe müssen dann separat mit einer geeigneten statischen Waage gewogen werden. Das entsprechende Porto muß dann in die Frankiereinheit manuell eingegeben werden. Der automatische Ablauf ist damit unterbrochen. Besonders nachteilig ist der Umstand, daß der Postversender nicht vorhersehen kann, ob der spezielle Brief, den er gemeinsam mit den anderen als Stapel anlegt, diese Gewichtsgrenzen überschreiten wird oder nicht.
Bei Mischpost ist die Wahrscheinlichkeit größer, daß die Waage ein falsches Meßergebnis ermittelt hat. Der Durchsatz bei Mischpost wird verringert, weil entweder die Geschwindigkeit verringert wird oder falsch gemessene Briefe ausgesteuert werden. Um die Geschwindigkeit verringern zu können sind steuerbare Motoren und eine komplizierte Steuerung erforderlich.

Es war die Aufgabe zu lösen, die Nachteile des Standes der Technik zu überwinden, eine Anordnung und ein Verfahren zur Steuerung einer dynamischen Waage zu schaffen. Die dynamischen Waage soll über einen breiten Gewichtmeßbereich auch bei hoher Transportgeschwindigkeit eine hohe Meßgenauigkeit garantieren. Die erfindungsgemäß gesteuerte Waage soll bei einfacher Steuerung im Durchschnitt schnell Mischpost verarbeiten können.

Die Aufgabe wird mit den Merkmalen des Verfahrens nach Anspruch 1 und mit den Merkmalen einer Anordnung nach Anspruch 8 gelöst.

Die Wiegegenauigkeit ist erfahrungsgemäß abhängig vom Schwingungsverhalten der Waage, wobei die Vorlast, das Massenträgheitsmoment, die Steifigkeit und Dämpfung den größten Einfluß ausüben. Es wurde nun gefunden, daß ein vom Gewicht des Poststückes abhängiges definiertes Verringern (Einbrechen) der Motordrehzahl die Meßergebnisse verbessert, auch wenn keine Steuerung der Verringerung der Transportgeschwindigkeit erfolgt. Die Baulänge des Adapters von der Waage zur Frankiermaschine ist vorteilhaft minimiert. Es wurde weiterhin gefunden, daß zur Erzielung einer in der Summe hohen Taktleistung, die Geschwindigkeit bei allen langen Briefen nicht verringert werden muß, sondern daß es ausreicht, wenn nur die falsch gewogenen Briefe noch einmal gewogen werden. Unter der Vorraussetzung einer zur Messung ausreichenden Größe des Wiegetellers, kann nun bei der Mischpostverarbeitung in vorteilhafter Weise eine Steuerung der Transportgeschwindigkeit in Abhängigkeit vom Format des Poststückes unterbleiben.

Erfindungsgemäß wird in einem dynamischen Betriebsmodus das Poststück in Abhängigkeit vom Gewicht durch die Transportvorrichtung transportiert, ohne daß die Motordrehzahl konstant gehalten wird. Die Transportvorrichtung weist eine Spannvorrichtung für den Transportriemen auf, welche eine Einstellung des Schlupfes zwischen Antrieb und Transportriemen gestattet. Ein mit der Steuerung verbundener Motor verringert seine Drehzahl mit dem Gewicht des auf dem Transportriemen transportierten Poststückes. Der Aufbau der Waage mit Wiegeteller und Transportvorrichtung gestattet ein gedämpftes Schwingungsverhalten insbesondere bei einem Einbrechen der Motordrehzahl, was die Meßergebnisse bei einzelnen schweren Poststücken verbessert.

Beim dynamischen Wiegen werden die schweren Poststücke automatisch langsamer transportiert, was die verfügbare Meßzeit erhöht. Die Auswertung der Messungen erfolgt in der Steuerung der Waage und erfordert eine Rechenzeit und eine Reaktionszeit. Die Vorderkante des Poststückes verläßt nach Ablauf der Meßzeit den Wiegeteller. Wenn nach Ablauf der Meßzeit ein Algorithmus zur Fehlererkennung einen Fehler detektiert, wird von der Steuerung die Waage in einen Nachwiegemodus automatisch umgeschaltet. Bei den gewählten Abmaßen des Wiegetellers wurde das größte zu verarbeitende Format berücksichtigt. Die gewählte Transportgeschwindigkeit des Riemens in der Waage entspricht zwar der Transportgeschwindigkeit des Riemens in der Frankiermaschine, jedoch verringern die eingestellten Abstände von Brief zu Brief die Taktleistung der Waage auf ca. zwei Drittel der maximalen Taktleistung der Frankiermaschine. Es wurde gefunden, daß unter diesen Bedingungen ein Nachmessen des Gewichtes von Poststücken nur selten erforderlich ist.

Vorteilhafte Weiterbildungen der Erfindung sind in den abhängigen Ansprüchen gekennzeichnet bzw. werden nachstehend zusammen mit der Beschreibung der bevorzugten Ausführung der Erfindung anhand der Figuren näher dargestellt. Es zeigen:
- Figur 1,: Perspektivische Ansicht einer dynamischen Waage von vorn rechts,
- Figur 2a,: Prinzipbild der Transportvorrichtung,

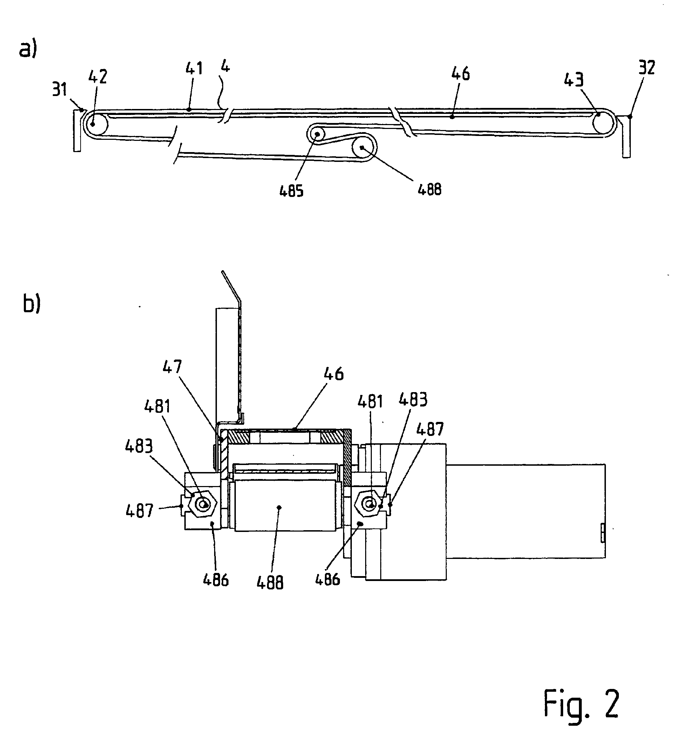

- Figur 2a,: Seitenansicht der Spannvorrichtung,

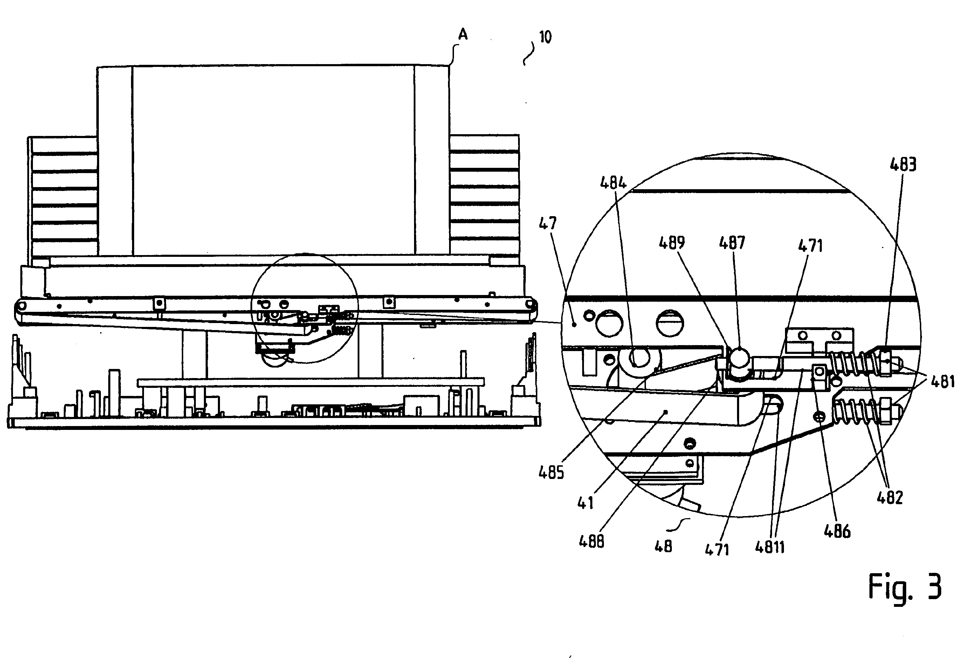

- Figur 3,: Perspektivische Ansicht der Transportvorrichtung von vorn rechts mit Spannvorrichtung,

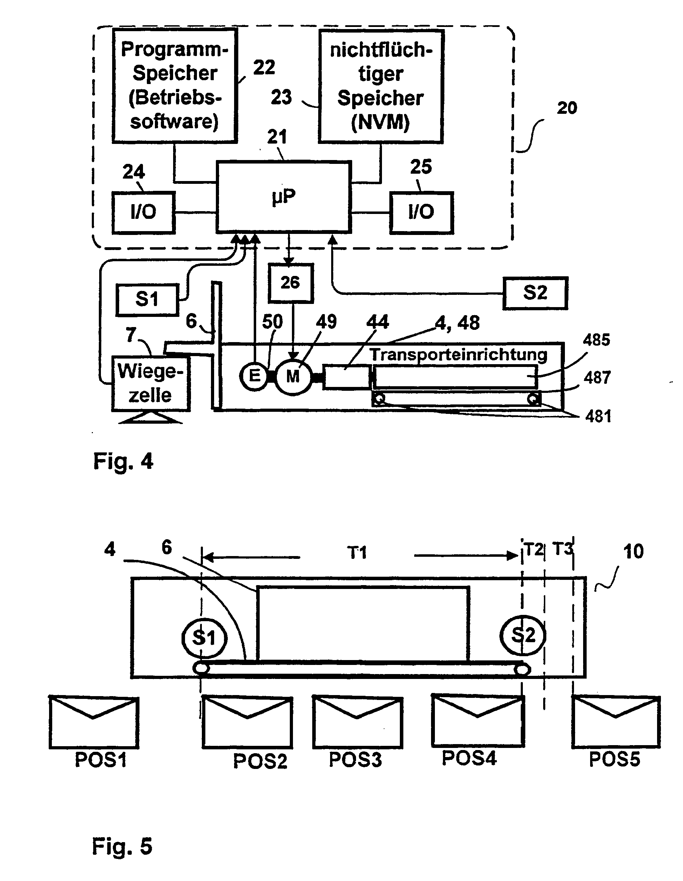

- Figur 4,: Blockschaltbild der Steuerung einer dynamischen Waage,
- Figur 5,: Darstellung von Briefpositionen im Briefstrom relativ zum Wiegeteller beim dynamischen Wiegen,

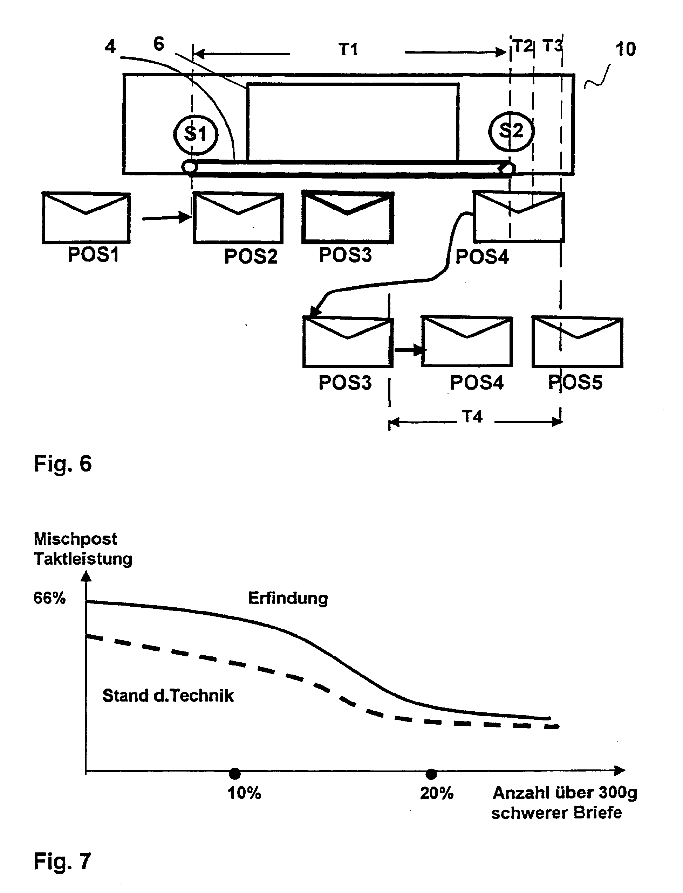

- Figur 6,: Darstellung von Briefpositionen im Briefstrom relativ zum Wiegeteller beim Umschalten zum Nachwiegemodus,
- Figur 7,: Darstellung der Mischpost-Taktleistung in Abhängikeit von der Anzahl schwerer Poststücke,

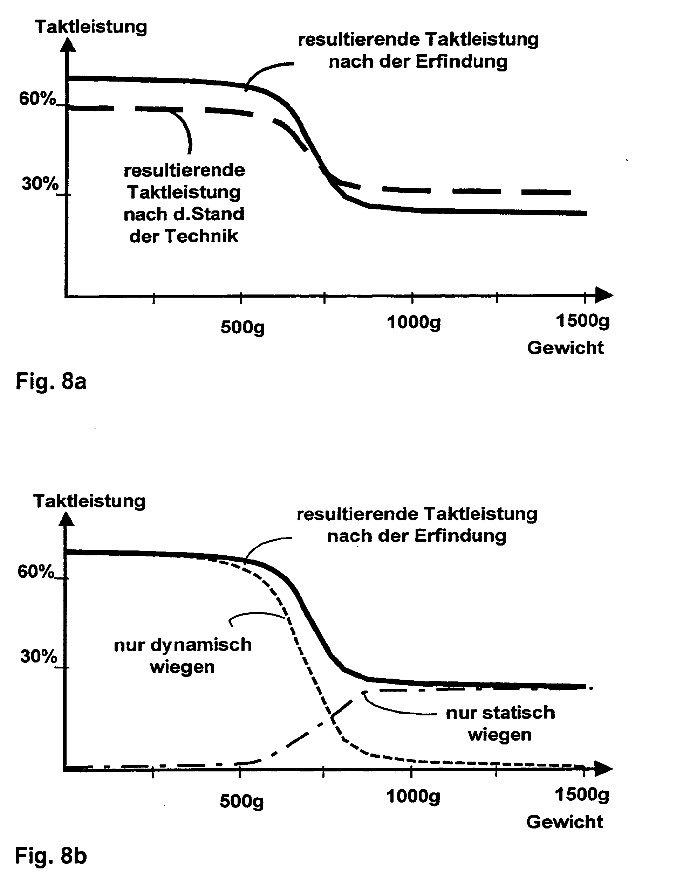

- Figur 8a, 8b,: Darstellung der Taktleistung in Abhängikeit von dem Gewicht schwerer Poststücke,

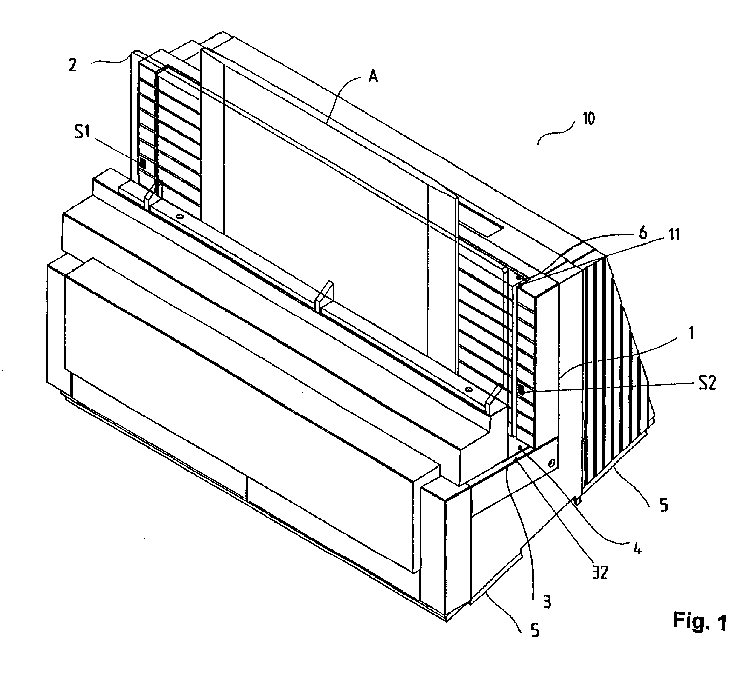

In der Figur 1 wird eine perspektivische Ansicht einer dynamischen Waage 10 dargestellt, welche für den Transport von auf der Kante stehenden Briefen bzw. Poststücken A ausgebildet ist. Letztere liegen an einem Wiegeteller 6 an, welcher in einer Ausnehmung 11 in einer hinteren Führungswand 1 der Waage angeordnet ist. Beidseitig der Ausnehmung 11 für den Wiegeteller 6 sind in der hinteren Führungswand 1 Sensoren S1 und S2 angeordnet. In Höhe der unteren Führungswand 3 der Waage liegt eine Transporteinrichtung 4 mit einem Transportriemen, der unterhalb der Sensoren S1 und S2 umgelenkt wird. Die hintere Führungswand 1 ist leicht nach hinten geneigt, vorzugsweise um 18° über die Senkrechte hinaus. Das entspricht einem bereits für eine automatische Briefzuführung und eine Frankiermaschine ermittelten Optimierungswinkel, siehe auch DE 196 05 014 C1 und DE 196 05 015 C1. Die untere Führungswand 3 ist orthogonal zur hinteren und demzufolge auch zur vorderen Abdeckplatte 2 angeordnet. Damit wird eine definierte Brieflage und eine harmonische Anpassung an die vor- und nachgeordneten Geräte erreicht. Die vordere Abdeckplatte 2 besteht beispielsweise aus Plexiglas. Alle genannten Baugruppen beziehungsweise Teile sind über entsprechende Zwischenstücke auf einem Chassis 5 befestigt. Der Wiegeteller 6 weist eine Rückwand zur Führung des Poststückes A und eine Transporteinrichtung 4 für das Postgut A auf, die zugleich den Boden des Wiegetellers 6 bildet. Der Wiegeteller 6 ist am ungefähren Ort des gemeinsamen Schwerpunktes des Wiegetellers 6 und eines mittig auf dem Wiegeteller 6 angeordneten Poststückes A mit dem höchstzulässigen Gewicht und den größten zulässigen Abmessungen an eine Wiegezelle 7 angekoppelt. Der Wiegeteller 6 ist in Leichtbauweise biege- und verwindungssteif ausgeführt. Die einstückig in Sandwichbauweise ausgeführte Rückwand des Wiegetellers 6 hat ein zentrales Krafteinleitungselement, mit welchem die Rückwand auf einem freien Ende der Wiegezelle befestigt ist. Weitere Einzelheiten zum konstruktiven Aufbau der Waage sind dem DE 198 33767 C2 zu entnehmen.

Gemäß Figur 2a ist das Vorderende 31 der unteren Führungswand 3 im Eingangsbereich der Waage so gestaltet, daß der Brief A annähernd tangential auf einen Transportriemen 41 aufsetzt. Vorzugsweise ist die Oberseite des Vorderendes 31 der unteren Führungswand 3 niveaugleich zur Oberseite des Transportriemens 41 angeordnet. An der unteren Führungswand 3 ist ein Hinterende 32 von der Breite des Transportriemens 41 angeordnet ist. Letzteres ist von geringerer Länge, als die Breite des Transportriemens 41, um den Transportweg zur Frankiermaschine zu minimieren. Das Hinterende 32 der als Adapter zur Frankiermaschine ausgebildeten unteren Führungswand 3 im Ausgangsbereich der Waage ist so gestaltet, daß der Brief A während des Verlassens des Transportriemens 41 zunächst frei liegt. Die Oberseite des Hinterendes 32 der unteren Führungswand 3 ist zu diesem Zweck niedriger angeordnet als das Niveau der Oberseite des Transportriemens 41. Das Hinterende 32 hat die Breite des Transportriemens 41 und ist im Unterschied dazu klein in der Länge, um den Brief sehr schnell während des Durchlaufens eines Reaktionszeitbereiches T3 an die Frankiermaschine weitergeben zu können.
Der Transportriemen 41 ist so breit bemessen, daß ein Brief mit der größten zugelassenen Dicke, beispielsweise 20 mm, so viel Platz hat, daß dieser bei Anlage an der Rückwand des Wiegetellers 6 die vordere Abdeckplatte 2 der Waage nicht berührt. Damit werden Verfälschungen des Meßergebnisses durch Reibung vermieden. Die Transporteinrichtung 4 weist für den Transportriemen 41 eine vordere und eine hintere Umlenkrolle 42, 43 und eine Antriebsrolle 485 nebst Spannrolle 488 auf. Der Transportriemen 41 ist für eine Längsdehnung nichtelastisch ausgebildet. Es ist vorgesehen, daß die Antriebsrolle 485, die den Transportriemen 41 antreibt, ein sandgestrahltes Aluminiumritzel ist, daß der Transportriemen 41 aus einem dehnungsarmen Gewebe mit einer Gleitbeschichtung aus Kunststoff besteht, wobei letzterer am Aluminiumritzel aufgrund der Riemenspannung mit einem vordefinierten Schupf anliegt. Um mit zwei Umlenkrollen 42, 43 auszukommen und die Transportriemenspannung schonend einzustellen und trotzdem einen kontinuierlichen und harmonischen Brieflauf zu gewährleisten, ist unter dem oberen, die Brieflast tragenden Riemenbereich noch eine Stützvorrichtung 46, 47 vorgesehen. Der Transportriemen 41 gleitet bei größerer Last auf einer Stützplatte 46 entlang, deren Oberfläche entsprechend glatt ausgeführt ist. Auf seiner dem Postgut zugewandten Oberfläche ist der Transportriemen 41 vorzugsweise mit einer Polyurethan-Schaum-Haftschicht beschichtet.

Die Figur 2b zeigt eine Seitenansicht der Spannvorrichtung 48. Die Spannrolle 488 sitzt auf einer Spannachse 487, deren Enden für jeweils einem Führungsbolzen 481 durchbohrt sind. Auf jeden Führungsbolzen 481 ist eine (verdeckte) Spiralfeder gesteckt und eine Mutter 483 geschraubt. Die Stützplatte 46 für den Transportriemen 41 ist beidseitig an je einem Tragblech 47 befestigt. Ein Anschlagblech 486 ist auf jedem Tragblech 47 befestigt und ist zwischen der Mutter 483 und der Spannachse 487 angeordnet.

Die Figur 3 zeigt (für eine Waage mit abgenommenen Gehäuse) eine perspektivische Ansicht der Transportvorrichtung von vorn rechts mit Spannvorrichtung. Die Spannrolle 488 der Spannvorrichtung 48 wird mit ihrer Achse 487 entgegen der Riementransportrichtung so weit verstellt und letztere dann über eine Feder 482 vorgespannt, so daß der Transportriemen 41 in vorbestimmter Weise mit definierter Kraft straff gespannt ist. Dadurch wird für schwere Briefe ein Schlupf voreingestellt. Die Tragbleche 47 und die Stützplatte 46 können beispielsweise aus Aluminium oder einem anderen leichten aber festen Material gefertigt sein und sind am Wiegeteller 6 so befestigt, das eine relativ steife Konstruktion entsteht, welche eine hohe Eigenfrequenz aufweist.
Im Bildausschnitt rechts der Figur 3 ist die Spannvorrichtung 48 vergrößert dargestellt. Auf jeden Führungsbolzen 481 ist eine Spiralfeder 482 aufgesteckt und mit einer Druckspannung vorgespannt, welche sich auf die Spannrolle 488 überträgt. Jede der beiden Spiralfedern 482 liegt einerseits an einer Mutter 483 und andererseits an dem Anschlagblech 486 an. Die - nicht dargestellte - Durchbohrung der Spannachse 487 ist so ausgebildet, daß die Führungsbolzen 481 mit ihrem Formschlußteil 4811 verdrehungssicher gelagert sind. Ein Sicherungsring 489 am Ende des Führungsbolzens 481 verhindert das Herrausrutschen des Führungsbolzens 481 aus der Durchbohrung der Spannachse 487. In Höhe der Spannrolle 488 weisen die Tragbleche 47 Langlöcher 471 auf. Wenn der Transportriemen 41 mittels der Spannrolle 488 vorgespannt wird, gleitet deren Spannachse 487 auf beiden Seiten in einem Langloch 471 des Tragbleches 47.

In einer - nicht gezeigten - alternativen Ausführung der Spannvorrichtung ist vorgesehen, die Riemenspannung aufgrund anderer geeigneter elastischer Spannmittel aufzubringen. Solche Spannmittel sind beispielsweise bekannte Zugfedern oder Torsionsfedern.

Die Figur 4 zeigt ein Blockschaltbild der Steuerung 20 einer dynamischen Waage 10, die einen Mikroprozessor 21 aufweist, welcher mit einem Programmspeicher 22, mit einem nichtflüchtigen Speicher 23 sowie mit Schnittstellen zur Ein- und Ausgabe 24, 25 verbunden ist. Der Mikroprozessor 21 ist mit einem Motor 49 der Transporteinrichtung 4 der Waage über einen Treiber 26, mit einem Geschwindigkeitssensor 50 und mit Sensoren S1, S2 sowie mit einer Wiegezelle 7 betriebsmäßig verbunden, um Geschwindigkeitssignale, Sensorsignale und Gewichtsdaten zu empfangen und um Steuerbefehle an die Transporteinrichtung 4 zu senden. Die Transporteinrichtung 4 enthält vorzugsweise einen Gleichstrommotor 49, welcher mit Gleichstromimpulsen gespeist wird, wobei sich aufgrund des Verhältnisses der Impulslänge zur Impulspause eine bestimmte Drehzahl einstellt. Als Gleichstrommotor ist der Typ M42x15 Gefeg-Antriebstechnik und als Geschwindigkeitssensor ein Encoder 50 geeignet, welcher mit ersterem mechanisch gekoppelt ist.

Im Betriebsmodus für den dynamischen Betrieb der Waage führt die Transporteinrichtung 4 eine Vorwärtsbewegung des betreffenden Briefes innerhalb der Waage stromabwärts mit einer für leichte Briefe konstanten Geschwindigkeit aus, wobei diese Geschwindigkeit die Transportgeschwindigkeit in der weiteren Verarbeitungsstation nicht übersteigt. In vorteilhafter Weise weist der Motor 49 der Transporteinrichtung 4 bei deaktivierter Drehzahlregelung in Verbindung mit den in der Figur 3 gezeigten Bestandteilen der Transporteinrichtung 4 am Wiegeteller 6 eine Nachgiebigkeit auf, welche Stöße und Schwingungen bei schweren Poststücken bedämpft.
Durch den Einsatz eines in der Polarität der abgegebenen Impulse umschaltbaren Treibers 26, der zwischen Gleichstrommotor 49 und der Steuerung 20 geschaltet ist, besitzt die Transporteinrichtung der Waage einen umschaltbaren Antrieb, womit bei entsprechender Steuerung die Transportrichtung der Waage im zweiten Betriebsmodus durch Umpolung der an den Motor 49 angelegten Impulsspannung umgekehrt werden kann. Der Motor 49 ist über ein geeignetes Getriebe 44 mit der Antriebsrolle 485 verbunden. Das Getriebe 44 kann sowohl ein Zahnradgetriebe als auch ein Riemengetriebe sein.

In einer anderen Ausführungsform ist vorgesehen, daß die Transporteinrichtung der Waage einen umschaltbaren Antrieb und daß die Steuerung 20 den Treiber 26 umfaßt, der zwischen Antrieb und der Steuerung geschaltet ist, womit die Transportrichtung der Waage umgekehrt werden kann, um im zweiten Betriebsmodus eine Nachmessung auszuführen.

In einer alternativen Ausführung, umfaßt die Transporteinrichtung 4 der Waage ein umschaltbares Getriebe mit Motor, wobei durch Umschaltung des Getriebes bei an den Motor angelegter Betriebsspannung im zweiten Betriebsmodus die Transportrichtung der Waage umgekehrt werden kann. Die Wiegezelle 7 besitzt Dehnungsmeßstreifen mit angeschlossener Auswerteschaltung, welche digitale Gewichtsdaten an den Mikroprozessor 21 abgibt. Der Sensor S1 stromaufwärts dient als Einlaufsensor und der Sensor S2 stromabwärts dient als Auslaufsensor. Zum Sensor gehört eine an sich bekannte Auswerteschaltung, welche digitale Signale an den Mikroprozessor 21 abgibt. Ein Sensor kann beispielsweise als Lichtschranke ausgebildet sein. Die Wiegezelle ist vorzugsweise vom Typ HBM PW 2G der Firma Hottinger Baldwin Meßtechnik.

Es ist vorgesehen, daß die dynamische Waage in mindestens zwei automatisch wählbaren Betriebsmoden betrieben werden kann, wobei die Selektion des Betriebsmodus durch die dynamische Waage selbst erfolgt.
1. Beim schnellen dynamischen Wiegen und Frankieren besteht das Risiko, daß bei hohen Briefgewichten in Grenzsituationen (Portogrenzen) überfrankiert wird. Es wurde jedoch festgestellt, daß hohe Briefgewichte in einem gemischten Briefstapel nur selten vorkommen. Der Vorteil des zweiten benutzerwählbaren Betriebsmodus liegt darin, daß durch weniger Stopps weniger Taktzeitverluste auftreten (Fig.5). Aus dem zweiten Betriebsmodus kann die Waage automatisch in einen Nachwiegemodus umschalten (Fig.6).
2. Die Waage ist von einem dynamischen auf einen halbdynamischen Betriebsmodus umschaltbar. Dazu wird der Motor der Transporteinrichtung, vorzugsweise ein Gleichstrommotor, umgepolt. Alternativ kann ein Getriebe umgeschaltet werden, wenn die Waage ein ungültiges Meßergebnis ermittelt hat. Damit wird eine Rückwärtsbewegung des fehlerhaft gemessenen Briefes innerhalb der Waage erreicht. Bei der anschließenden Wägung stoppt die Waage das Transportband solange, bis die Waage ein richtiges Meßergebnis ermittelt hat. Also arbeitet die Waage 10 anschließend im statischen bzw. halbdynamischen Betriebsmodus nur für anfangs falsch gewogene Briefe bzw. andere Poststücke.

Die Figur 5 zeigt eine Darstellung von Briefpositionen im Briefstrom relativ zum Wiegeteller 6 beim dynamischen Wiegen. Anhand der Figur 5 und nachfolgender Tabelle erfolgt die Erläuterung der Wirkungsweise der Steuerung 20:

| Position | Aktion der Steuerung |
|---|---|
| POS1 | Keine Aktion (Brief ist vor der Einlauflichtschranke) |
| POS2 | Start Meßzeitintervall, Motorregelung deaktivieren |
| POS3 | Meßphase (Brief liegt komplett auf dem Wiegeteller) |
| POS4 | Stop Meßzeitintervall, Gewicht ermitteln & auswerten |
| POS5 | Bereitschaft signalisieren (Brief hat Wiegeteller verlassen) |

Ein Brief läuft in die Einlauflichtschranke ein und aktiviert den Sensor S1. Die Sensoren S1 und S2 liegen außerhalb des Wiegebereiches stromauf- bzw. stromabwärts neben dem Wiegeteller 6 . Durch diese Konstruktion kann der Wiegeteller 6 in seiner Länge um 6 bis 10% verkürzt ausgebildet sein. Das erhöht besonders die Taktleistung beim dynamischen Wiegen leichter Poststücke. In der Position POS1 ist die Drehzahlregelung für den Motor 49 noch aktivert. Die Position POS2 verdeutlicht die Lage eines Briefes beim Start der Messungen. Ein erster Meßzeitbereich T1 beginnt mit dem Wiegen bei deaktivierter Motordrehzahlregelung 21, 26, 29, 50. Die Briefhinterkante verläßt im Einlauf den Bereich des Sensors S1. Die Position POS3 verdeutlicht die Briefposition in der Meßphase. Keiner der Sensoren S1, S2 ist aktiviert.

Die Position POS4 verdeutlicht die Lage eines Briefes beim Ende der Messungen. Die Briefvorderkante erreicht im Auslauf den Bereich des Sensors S2. Bei dessen Aktivierung wird das Meßzeitintervall beendet.
Eine zweiter Rechenzeitbereich T2 schließt sich an, in welchem neben der Auswertung der Messungen auch geprüft wird, ob das Gewicht des Poststückes richtig bestimmt wurde, so daß letzteres in einem dritten Reaktionszeitbereich T3 stromabwärts zur Frankiermaschine weitergeleitet werden kann. In der Position POS5 verläßt der Brief die Waage. Ab dem Reaktionszeitbereich T3 - wobei in der Regel der Schwerpunkt des Briefes den Wiegeteller 6 noch nicht verlassen hat - kann jedoch noch der Brief auf den Wiegeteller 6 mittels einer umschaltbaren Transportvorrichtung zurück transportiert werden. Außerhalb des Meßzeitbereiches T1 wird die Drehzahlregelung für den Motor 49 wieder aktivert.

Die Figur 6 zeigt eine Darstellung von Briefpositionen im Briefstrom relativ zum Wiegeteller im Falle des Umschaltens zum Nachwiegemodus. Der Reaktionszeitbereich T3 dient dann zum Umschalten in den Nachwiegemodus, einschließlich einer Bremszeit und Sicherheitszeit. Der Brief wird stromaufwärts (Zeitbereich T4) zurück in die Position POS3 befördert, in der letzteren nun statisch gewogen und dann wieder über Position POS4 in die Position POS5 befördert.

Die Figur 7 zeigt eine prinzipielle Darstellung der Mischpost-Taktleistung in Abhängikeit von der Anzahl schwerer Poststücke in einem Poststapel. Bei schweren Poststücken sinkt die Taktleistung beim dynamischen Betrieb der Waage 10 bereits durch die ungeregelt sich verringernde Transportgeschwindigkeit. Bei einer größeren Anzahl schwerer Poststücke im Mischpoststapel wirkt sich dieses Sinken entsprechend stärker aus. Dennoch ist die Taktleistung bei Mischpost gegenüber dem Stand der Technik höher, weil große Formate weiterhin schnell transportiert werden. Diese Zugewinn beim dynamischen Wiegen resultiert aus der möglichen Verkürzung des Wiegetellers. Somit liegt die Mischpost-taktleistung insgesamt bereits bei einem Stapel ohne schwere Poststücke um 6 bis 10 % höher.

Die Figuren 8a und 8b zeigen Darstellungen der Taktleistung in Abhängikeit von dem Gewicht schwerer Poststücke. Der Kunde hat die Wahl zwischen mehreren benutzerwählbaren Betriebsmodi:
1. Nur einmal bzw. nicht Wiegen und Frankieren, führt zu einer Taktleistung bis 100% der einer Frankiermaschine (nicht dargestellt).
2. Langsam und halbdynamisch Wiegen und Frankieren, führt zu einer Reduzierung der Taktleistung bis 33% der einer Frankiermaschine (Stand der Technik) oder nach der Erfindung bis ca. 25 % (rechts im Diagram dargestellt).
3. Dynamisch Wiegen und Frankieren, führt nach der Erfindung zu einer Taktleistung bis zu ca. 66% der Taktleistung einer Frankiermaschine, wobei die Waage auf halbdynamisch Wiegen umschalten kann.

Die Taktleistung liegt vorteilhaft im Gewichtsbereich bis 500g höher als bisher im Stand der Technik erreicht werden konnte. Die Taktleistung einer Frankiermaschine (100%) wird aber nicht erreicht, denn die Briefabstände müssen größer sein als beim Drucken, da sich während des Wiegens nur ein Brief auf dem Wiegeteller befinden darf. Bei Erhöhung der Transportgeschwindigkeit beim Frankieren von ca. 68 cm/s auf 100 cm/s steigt die Taktleistung nur marginal, denn die Wiegegenauigkeit und die praktisch beim Wiegen noch mögliche Transportgeschwindigkeit verhalten sich umgekehrt proportional zueinander.

In der Figur 8b ist die Taktleistung in Abhängigkeit von dem Gewicht schwerer Poststücke dargestellt. Es wurde ermittelt, daß die Taktleistung einer dynamischen Waage bei ca. 66% (maximal 70 %) der Taktleistung einer Frankiermaschine liegt und daß die Taktleistung einer halbdynamischen Waage bei ca. 20% bis 25% der Taktleistung einer Frankiermaschine liegt. Im Gewichtsbereich bis 500g dominiert die dynamische Messung und im Gewichtsbereich ab 750g dominiert die statische Messung die resultierende Taktleistung, was aus der Figur 8b hervorgeht. Der Auswertealgorithmus kann bei Störungen schon früher auf statisch Wiegen umschalten. Im Mittel ergibt sich aber der gezeigte ansteigende Verlauf für das Umschalten zum statischen Wiegen im Gewichtsbereich von 500g bis 800g. Der erforderliche Rücktransport zum statischen Wiegen, nach dem Anhalten, verbraucht eine gewisse Rücktransportzeitdauer T4. Im Unterschied zu aus dem Stand der Technik bekannten statisch bzw. halbdynamisch arbeitenden Waagen fällt die resultierende Taktleistung deshalb geringer aus.

Bei Mischpostverarbeitung sinkt die Taktleistung im Bereich bis zu 500g bei der dynamischen Waage in Abhängigkeit von der Anzahl schwerer Poststücke bis auf ca. 40 % der Taktleistung einer Frankiermaschine (Fig.7). Ist die Anzahl der großformatigen und schweren Poststücken im Poststapel höher, nährt sich die Taktleistung im Ergebnis der Taktleitung beim halbdynamischen Betrieb an, da von der Steuerung 20 öfter eine Nachmessung veranlaßt wird. Es ist vorgesehen, daß die Steuerung der dynamische Waage, in Abhängigkeit von der Auswertung der Gewichtsmessung im ersten Betriebsmodus den Transport des Poststückes zur weiteren Verarbeitungsstation stromabwärts erlaubt oder eine Umschaltung in einen zweiten Betriebsmodus vornimmt.

Erfindungsgemäß erfolgt die Auswertung der Wiegeergebnisse im zweiten Betriebsmodus mit dem Ziel gleichzeitig genau und geschwindigkeitsoptimal zu arbeiten, in den Schritten:
- Feststellung, daß der Wiegewert in gewissen Grenzen ungenau sein könnte,
- Plausibilitätsprüfung,
- Ausgabe eines plausiblen Gewichtswertes an die Frankiermaschine oder automatische Umschaltung in den halbdynamischen Betrieb der Waage.

Die Steuerung der dynamische Waage nimmt, in Abhängigkeit von der Auswertung der Gewichtsmessung im ersten Betriebsmodus eine Umschaltung in einen weiteren Betriebsmodus vor, der den Transport des Poststückes zur weiteren Verarbeitungsstation stromabwärts veranlaßt, wenn eine entsprechende Voreinstellung der Steuerung der dynamische Waage es erlaubt, daß bei einer ungenauen Messung, ein plausibler Gewichtswert anstelle des der tätsächlichen Gewichtswertes gesetzt wird, wobei der plausible Gewichtswert höher als der tätsächliche Gewichtswert ist. Mit der Frankiermaschine erfolgt ein Drucken eines Portos, das dem plausiblem Gewichtswert entspricht, der um einen Betrag oder Faktor höher als der ermittelte, wahrscheinlich ungenaue Wert liegt. Das hat nur Auswirkungen, wenn der tatsächliche Gewichtswert in der Nähe von Portogrenzen liegt - dann würde das Poststück überfrankiert werden - oder wenn der als wahrscheinlich ungenau detektierte Wert grob falsch ist.

Obwohl die Steuerung einfach ist, wird eine vorausgehende manuelle Einstellung oder Steuerung zur Verringerung der Transportgeschwindigkeit nicht erforderlich. Anstelle des Mikroprozessors können auch Mikrocontroller oder anderwenderspezifische Schaltkreise (ASIC's) eingesetzt werden.

Die Erfindung ist nicht auf die vorliegenden Ausführungsform beschränkt, da offensichtlich weitere andere Ausführungen der Erfindung, innerhalb des Umfangs der beiliegenden Ansprüche, entwickelt bzw. eingesetzt werden können, die vom gleichen Grundgedanken der Erfindung ausgehend, die von den anliegenden Ansprüchen umfaßt werden.

## Patentansprüche

1. Verfahren zur Steuerung einer dynamischen Waage, die gemischtes Postgut mit unterschiedlicher Größe, Dicke verarbeiten kann, und die in mindestens zwei Betriebsmoden betrieben werden kann, wobei das Postgut anschließend eine weitere Verarbeitungsstation durchläuft,
**dadurch gekennzeichnet,**
- **daß** im dynamischen Betriebsmodus vor dem Beginn eines ersten Meßzeitbereiches (T1) ein Poststück (A) unabhängig von seinem Format mit einer auf einem voreingestellten Wert eingestellten Transportgeschwindigkeit zugeführt wird, wenn sich das Poststück (A) im Einlauf der Waage befindet,
- **daß** während des dynamischen Wieges im Meßzeitbereich (T1) eine Drehzahlregelung von der Steuerung (20) deaktiviert wird und daß eine Gewichtsmessung bei deaktivierter Drehzahlregelung erfolgt,
- **daß** bei einem sich im Auslauf der Waage befindenden Poststück (A) eine Aktivierung der Drehzahlregelung für den Motor (49) erfolgt.

2. Verfahren, nach Anspruch 1, **dadurch gekennzeichnet, daß** eine Steuerung (20) der Waage (10) im dynamischen Betriebsmodus
- vor dem Beginn des ersten Meßzeitbereiches (T1) die Transportgeschwindigkeit unabhängig vom Format des Poststückes (A) auf einem voreingestellten Wert beibehält,
- anhand eines Signals eines ersten Sensors (S1) erkennt, daß sich ein Poststück (A) im Einlauf der Waage befindet,
- während des dynamischen Wieges im Meßzeitbereich (T1) durch die Steuerung (20) eine ungeregelte Impulsspannung an einen Motor (49) anlegt, der eine Transportvorrichtung (4) bei einer deaktivierten Drehzahlregelung mit einer vorbestimmten Leistung antreibt, wobei der Motor (49) mit einer Spannvorrichtung (48) für eine definierte Einstellung der Riemenspannung eines Transportriemens (41) und mit einem schwingungsgedämpften Aufbau der Transportvorrichtung (4) der Waage (10) so zusammenwirkt, daß sich die Transportgeschwingigkeit des Poststückes (A) während des dynamischen Wiegens in Abhängigkeit vom Poststückgewicht verringert ,
- anhand eines Signals eines zweiten Sensors (S2) erkennt, daß sich ein Poststück (A) im Auslauf der Waage befindet und daß das Signal des zweiten Sensors (S2) in der Steuerung (20) eine Aktivierung der Drehzahlregelung für den Motor (49) auslöst.

3. Verfahren, nach den Ansprüchen 1 bis 2, **dadurch gekennzeichnet, daß** im ersten Betriebsmodus die Transportgeschwindigkeit entsprechend der Transportgeschwindigkeit der weiteren Verarbeitungsstation voreingestellt wird, so daß sich beim dynamischen Wiegen eine Taktleistung in der Nähe von ca. 66% ergibt.

4. Verfahren, nach Anspruch 1, **dadurch gekennzeichnet, daß** die Steuerung der dynamische Waage, in Abhängigkeit von einer Auswertung der Gewichtsmessung im ersten Betriebsmodus den Transport des Poststückes zur weiteren Verarbeitungsstation stromabwärts erlaubt oder eine Umschaltung in einen zweiten Betriebsmodus vornimmt, in welchem die Waage statisch wiegen kann.

5. Verfahren, nach Anspruch 3, **dadurch gekennzeichnet, daß** im zweiten Betriebsmodus die Transporteinrichtung der Waage eine Rückwärtsbewegung des betreffenden Briefes innerhalb der Waage stromaufwärts und anschließend eine Vorwärtsbewegung des betreffenden Briefes innerhalb der Waage stromabwärts durchführt.

6. Verfahren, nach Anspruch 3, **dadurch gekennzeichnet, daß** im zweiten Betriebsmodus die Transporteinrichtung der Waage eine Vorwärtsbewegung des betreffenden Briefes innerhalb der Waage stromabwärts mit einer konstanten Geschwindigkeit ausführt.

7. Verfahren, nach Anspruch 1, **dadurch gekennzeichnet, daß** die Steuerung der dynamische Waage, in Abhängigkeit von der Auswertung der Gewichtsmessung im ersten Betriebsmodus eine Umschaltung in einen weiteren Betriebsmodus vornimmt, der den Transport des Poststückes zur weiteren Verarbeitungsstation stromabwärts veranlaßt, wenn eine entsprechende Voreinstellung der Steuerung der dynamische Waage es erlaubt, daß bei einer ungenauen Messung, ein plausibler Gewichtswert anstelle des tätsächlichen Gewichtswertes gesetzt wird, wobei der plausible Gewichtswert höher als der tätsächliche Gewichtswert ist.

8. Anordnung, zur Durchführung des Verfahrens nach Anspruch 1, **dadurch gekennzeichnet, daß** je ein Einlaufsensor (S1) bzw. ein Auslaufsensor (S2) stromaufwärts bzw. stromabwärts eines Wiegetellers (6) angeordnet und mit der Steuerung (20) der Waage (10) verbunden ist, wobei der Wiegeteller (6) nahe seines Schwerpunktes mit einer Wiegezelle (7) mechanisch gekoppelt ist, daß mit der Steuerung (20) ein Geschwindigkeitssensor (50) verbunden ist, wobei ein Motor (49) mit der Steuerung (20) steuerungsmäßig verbunden ist und über eine Antriebsrolle (485) einen Transportriemen (41) antreibt, welcher sich im unteren Bereich des Wiegetellers (6) nahe der unteren Führungswand (3) auf einer Stützvorrichtung (46, 47) abstützt sowie daß die untere Führungswand (3) im Ausgangsbereich der Waage als Adapter zur Frankiermaschine ausgebildet ist.

9. Anordnung, nach Anspruch 8, **dadurch gekennzeichnet, daß** die Waage (10) eine Transporteinrichtung (4) mit einem umschaltbaren Antrieb (49, 44, 485) und die Steuerung (20) einen Treiber (26) umfaßt, der zwischen Antrieb und der Steuerung (20) geschaltet ist, womit im zweiten Betriebsmodus die Transportrichtung der Waage (20) umgekehrt werden kann.

10. Anordnung, nach Anspruch 9, **dadurch gekennzeichnet, daß** die Transporteinrichtung (4) der Waage einen Gleichstrommotor (49) umfaßt, wobei durch Umpolung der an den Motor (49) angelegten Impulsgleichspannung im zweiten Betriebsmodus die Transportrichtung (4) in der Waage (10) umgekehrt werden kann.

11. Anordnung, nach Anspruch 9, **dadurch gekennzeichnet, daß** die Transporteinrichtung der Waage ein Getriebe (44) mit Motor (49) umfaßt, wobei durch Umschaltung des Getriebes (44) bei an den Motor (49) angelegter Betriebsspannung im zweiten Betriebsmodus die Transportrichtung der Waage umgekehrt werden kann.

12. Anordnung, nach Anspruch 8, **dadurch gekennzeichnet, daß** die Stützvorrichtung aus einer zwischen zwei Tragblechen (47) angeordneten Stützplatte (46) besteht und daß die Tragbleche (47) am Wiegeteller (6) befestigt sind, sowie daß an den Tragblechen (47) eine Spannvorrichtung (48) für eine definierte Einstellung der Riemenspannung des Transportriemens (41) befestigt ist, welcher für eine Längsdehnung nichtelastisch ausgebildet ist.

13. Anordnung, nach Anspruch 12, **dadurch gekennzeichnet, daß** die Spannvorrichtung (48) die Riemenspannung über Zugfedern oder andere federelastische Spannmittel einzustellt gestattet.

14. Anordnung, nach Anspruch 8 bis 13, **dadurch gekennzeichnet, daß** die Spannvorrichtung (48) für eine definierte Einstellung der Riemenspannung eine Spannrolle (488) auf einer Spannachse (487) aufweist, deren Enden für jeweils einen Führungsbolzen (481) durchbohrt sind, daß auf jeden Führungsbolzen (481) eine Spiralfeder (482) gesteckt und eine Mutter (483) geschraubt ist, daß auf jedem Tragblech (47) ein Anschlagblech (486) befestigt und zwischen der Mutter (483) und der Spannachse (487) angeordnet ist, daß jede der beiden Spiralfedern (482), die einerseits an einer Mutter (483) und andererseits an dem Anschlagblech (486) anliegt, mit einer Druckspannung vorgespannt ist, welche sich auf die Spannrolle (488) überträgt.

15. Anordnung, nach Anspruch 14, **dadurch gekennzeichnet, daß** die Durchbohrung der Spannachse (487) derart ausgebildet ist, daß die Führungsbolzen (481) mit ihrem Formschlußteil (4811) verdrehungssicher gelagert sind, daß ein Sicherungsring (489) am Ende des Führungsbolzens (481) das Herrausrutschen des Führungsbolzens (481) aus der Durchbohrung der Spannachse (487) verhindert.

16. Anordnung, nach Anspruch 14, **dadurch gekennzeichnet, daß** die Tragbleche (47) in der Höhe der Spannrolle (488) Langlöcher (471) aufweisen, in welchen, wenn der Transportriemen (41) mittels der Spannrolle (488) vorgespannt wird, die Spannachse (487) gleitet.

17. Anordnung, nach Anspruch 8, **dadurch gekennzeichnet, daß** die Antriebsrolle (485), die den Transportriemen (41) antreibt, ein sandgestrahltes Aluminiumritzel ist, daß der Transportriemen (41) aus einem dehnungsarmen Gewebe mit einer Gleitbeschichtung aus Kunststoff besteht, wobei letzterer am Aluminiumritzel aufgrund der Riemenspannung mit einem vordefinierten Schupf anliegt.

18. Anordnung, nach Anspruch 8, **dadurch gekennzeichnet, daß** die untere Führungswand (3) ein Hinterende (32) von der Breite des Transportriemens (41) hat, welches von geringer Länge ist, als die Breite des Transportriemens (41), um den Transportweg zur Frankiermaschine zu minimieren.

19. Anordnung, nach Anspruch 8, **dadurch gekennzeichnet, daß** der Wiegeteller (6) eine Rückwand zur Führung des Poststückes (A) und eine Transporteinrichtung (4) für das Poststück (A) aufweist, die zugleich den Boden des Wiegetellers (6) bildet.

20. Anordnung, nach Anspruch 8, **dadurch gekennzeichnet, daß** der Wiegeteller (6) am ungefähren Ort des gemeinsamen Schwerpunktes des Wiegetellers (6) und eines mittig auf dem Wiegeteller (6) angeordneten Poststückes (A) mit dem höchstzulässigen Gewicht und den größten zulässigen Abmessungen an die Wiegezelle (7) angekoppelt ist.

21. Anordnung, nach Anspruch 8, **dadurch gekennzeichnet, daß** der Wiegeteller (6) in Leichtbauweise biege- und verwindungssteif ausgeführt ist, wobei Rückwand des Wiegetellers (6) ein zentrales Krafteinleitungselement aufweist, mit welchem die Rückwand des Wiegetellers (6) auf einem freien Ende der Wiegezelle (7) befestigt ist.

22. Anordnung, nach Anspruch 21, **dadurch gekennzeichnet, daß** die Rückwand des Wiegetellers (6) einstückig in Sandwichbauweise ausgeführt ist.

23. Anordnung, nach Anspruch 8, **dadurch gekennzeichnet, daß** der Geschwindigkeitssensor (50) ein Encoder ist, welcher mit einem Motor (49) mechanisch gekoppelt ist.

## Claims

1. A method for controlling a dynamic scale that can process mixed postal items of different size and thickness and that can be operated in at least two operating modes, the postal items subsequently passing a further processing station, **characterized in:**
- **that**, in the dynamic operating mode, prior to the start of a first measuring period (T1), a postal item (A) irrespective of its format is fed at a preset transport speed when the postal item (A) is in the inlet of the scale;
- **that**, during the dynamic weighing in the measuring period (T1), a speed control is deactivated by the control unit (20) and that weighing is carried out while the speed control is deactivated;
- **that** the speed control for motor (49) is activated when a postal item (A) is in the outlet of the scale.

2. A method according to claim 1, **characterized in that** a control unit (20) of the scale (10), in the dynamic operating mode,
- before the start of the first measuring period (T1), maintains the transport speed at a preset value independent from the format of the postal item (A);
- recognizes, by means of a signal of a first sensor (S1), that a postal item (A) is in the inlet of the scale;
- during the dynamic weighing during the measuring period (T1), by means of control unit (20), applies an uncontrolled pulse voltage to a motor (49) that drives a transport device (4) at a preset speed while the speed control is deactivated, wherein the motor (49) interacts with a tensioning device (48) for a defined setting of the belt tension of a transport belt (41) and with a vibration-dampened design of the transport device (4) of the scale (10) in such a manner that the transport speed of postal item (A) is reduced during the dynamic weighing in dependence on the weight of the postal item;
- recognized, from a signal of a second sensor (S2) that a postal item (A) is in the outlet of the scale and that the signal of the second sensor (S2) triggers an activation of the speed control of the motor (49) in the control unit (20).

3. A method according to claims 1 to 2, **characterized in that**, in the first operating mode, the transport speed is preset according to the transport speed of the subsequent processing station so that, during the dynamic weighing, there results a cycle rate of approx. 66%.

4. A method according to claim 1, **characterized in that** the control of the dynamic balance, depending on an evaluation of the weighing in the first operating mode, either allows the transport of the postal item downstream to the subsequent processing station or switches over to a second operating mode in which the scale can weigh statically.

5. A method according to claim 3, **characterized in that**, in the second operating mode, the transport device of the scale first performs a backward movement of the respective letter within the scale in upstream direction and then an advance movement of the respective letter downstream within the scale.

6. A method according to claim 3, **characterized in that**, in the second operating mode, the transport device of the scale performs an advance movement of the respective letter within the scale in downstream direction at a constant speed.

7. A method according to claim 1, **characterized in that** the control of the dynamic balance, depending on the evaluation of the weighing in the first operating mode, switches over to another operating mode that causes the transport of the postal item downstream to the further processing station when a respective preset of the control of the dynamic balance permits that, in case of an inaccurate measurement, a plausible weight is used instead if the actual weight, such plausible weight being higher than the actual weight.

8. An arrangement for performing the method according to claim 1, **characterized in that** an inlet sensor (S1) and an outlet sensor (S2) are arranged upstream and downstream of a weighing plate (6) respectively and connected with control unit (20) of the scale (10), said weighing plate (6) being mechanically coupled, near its centre of gravity, with a weighing cell (7); that a speed sensor (50) is connected to the control unit (20), wherein a motor (49) is connected with the control unit (20) and drives, via a driving roller (485), a transport belt (41) that is supported, in the lower area of the weighing plate (6) near the lower guide wall (3), by a support device (46, 47); and that said lower guide wall (3) is designed as an adapter to the franking machine in the outlet area of the scale.

9. An arrangement according to claim 8, **characterized in that** the scale (10) comprises a transport device (4) with a reversible drive (49, 44, 485) and the control unit (20) comprises a driver (26) connected between drive and control unit (20) by means of which the transport direction of the scale (20) can be reversed in the second operating mode.

10. An arrangement according to claim 9, **characterized in that** the transport device (4) of the scale comprises a DC motor (49) and that the transport direction (4) in scale (10) can be reversed in the second operating mode by changing the poles of the direct pulse current connected to motor (49).

11. An arrangement according to claim 9, **characterized in that** the transport device of the scale comprises a transmission (44) with a motor (49) and the transport direction of the scale can be reversed in the second operating mode by changing the transmission (44) while the operating voltage is applied to motor (49).

12. An arrangement according to claim 8, **characterized in that** the support device consists of a support plate (46) arranged between two carrying plates (47) and that the carrying plates (47) are fixed to the weighing plate (6) and that a tensioning device (48) is fixed to the carrying plates (47) for a defined setting of the belt tension of the transport belt (41) that is designed to be non-elastic as to longitudinal expansion.

13. An arrangement according to claim 12, **characterized in that** the tensioning device (48) allows to set the belt tension by means of tension springs or other spring-elastic tensioning means.

14. An arrangement according to claims 8 to 13, **characterized in that** the tensioning device (48) for a defined setting of the belt tension has a tensioning roller (488) on a tensioning axle (487) the ends of which have drilled holes for a guide bolt (481) each; that a spiral spring (482) is slipped and a nut (483) is screwed on every guide bolt (481); that a stop plate (486) arranged between nut (483) and tensioning axle (487) is fixed to every carrying plate (47); that either of the two spiral springs (482) lying on a nut (483) on the one side and on the stop plate (486) on the other side is pre-tensioned with a compressive stress that is transmitted to the tensioning roller (488).

15. An arrangement according to claim 14, **characterized in that** the drilled hole in tensioning axle (487) is designed such that the guide bolts (481) are borne in a twist-proof manner with their positive-fit part (4811); and that a locking ring (489) at the end of guide bolt (481) prevents guide bolt (481) from slipping out of the drilled hole in tensioning axle (487).

16. An arrangement according to claim 14, **characterized in that** the carrying plates (47) have oblong holes (471) at the height of the tensioning roller (488) in which the tensioning axle (487) is sliding when the transport belt (41) is tensioned by means of the tensioning roller (488).

17. An arrangement according to claim 8, **characterized in that** the driving roller (485) that drives the transport belt (41) is a sand-blasted aluminium pinion; that the transport belt (41) is made of a low-extension fabric with a sliding coating of plastic, the latter lying to the aluminium pinion with a pre-defined slip caused by the belt tension.

18. An arrangement according to claim 8, **characterized in that** the lower guide wall (3) has a rear end (32) having the width of the transport belt (41) which is of a shorter length than the width of transport belt (41) in order to minimize the transport path to the franking machine.

19. An arrangement according to claim 8, **characterized in that** weighing plate (6) has a rear wall for guiding the postal item (A) and a transport device (4) for the postal item (A) that at the same time forms the bottom of weighing plate (6).

20. An arrangement according to claim 8, **characterized in that** weighing plate (6) is coupled to the weighing cell (7) approximately at the place of the joint centre of gravity of weighing plate (6) and a postal item (A) arranged on the centre of weighing plate (6) and having the highest- permissible weight and the highest-permissible dimensions.

21. An arrangement according to claim 8, **characterized in that** the weighing plate (6) is designed as a rigid and torsionally stiff lightweight construction, the rear wall of weighing plate (6) having a central power-flow element by means of which the rear wall of weighing plate (6) is fixed to a free end of the weighing cell (7).

22. An arrangement according to claim 21, **characterized in that** the rear wall of weighing plate (6) is designed as a single-piece sandwich construction.

23. An arrangement according to claim 8, **characterized in that** the speed sensor (50) is an encoder that is mechanically coupled to a motor (49).

## Revendications

1. Procédé de commande d'une balance dynamique pouvant traiter des objets postaux variés, de différente taille et de différente épaisseur, et pouvant être actionnée selon au moins deux modes d'opération, les objets postaux passant ensuite par une autre station de traitement, **caractérisé en ce que**,
- en mode de fonctionnement dynamique, un objet postal (A) est acheminé avant le début d'une première plage de temps de mesures (T1), indépendamment de son format, à une vitesse de transport réglée à une valeur prédéterminée, et ce, si ledit objet postal (A) se trouve à l'entrée de la balance,
- durant la pesée dynamique dans la plage de temps de mesures (T1), un réglage de vitesse est désactivé par le dispositif de commande (20), et **en ce qu'**une mesure de poids résulte de la désactivation du réglage de vitesse,
- une activation du réglage de la vitesse pour le moteur (49) a lieu au niveau d'un objet postal (A) se trouvant à la sortie de la balance.

2. Procédé selon la revendication 1 **caractérisé en ce qu**'un dispositif de commande (20) de la balance (10) en mode de fonctionnement dynamique
- maintient la vitesse de transport à une valeur prédéterminée indépendamment du format de l'objet postal (A), avant le début de la première plage de temps de mesure (T1),
- détecte au moyen d'un signal émis par un premier capteur (S1) qu'un objet postal (A) se trouve à l'entrée de la balance,
- applique, au moyen du dispositif de commande (20), une tension d'impulsion non-réglée à un moteur (49) durant la pesée dynamique dans la plage de temps de mesures (T1), ledit moteur (49) actionnant, lors de la désactivation du réglage de la vitesse, un dispositif de transport (4) lors d'une puissance prédéterminée et collaborant avec un dispositif de tension (48) pour un réglage défini de la tension de courroie d'une courroie de transport (41) ainsi qu'avec une structure amortie du dispositif de transport (4) de la balance (10), de telle manière que la vitesse de transport de l'objet postal (A) diminue durant la pesée dynamique en fonction du poids de l'objet postal,
- détecte au moyen d'un signal émis par un deuxième capteur (S2) qu'un objet postal (A) se trouve à la sortie de la balance, et que le signal du deuxième capteur (S2) provoque une activation du réglage de la vitesse pour le moteur (49) dans le dispositif de commande (20).

3. Procédé selon l'une quelconque des revendications 1 à 2 **caractérisé en ce que** la vitesse de transport dans le premier mode de fonctionnement est préréglée selon la vitesse de transport de l'autre station de traitement, de telle manière que lors de la pesée dynamique, il en résulte une cadence d'environ 66%.

4. Procédé selon la revendication 1 **caractérisé en ce que** le dispositif de commande de la balance dynamique permet, en premier mode de fonctionnement, le transport en aval de l'objet postal vers l'autre station de traitement en fonction d'une évaluation de la mesure du poids, ou effectue une inversion dans un deuxième mode de fonctionnement dans lequel la balance peut peser de manière statique.

5. Procédé selon la revendication 3 **caractérisé en ce qu'**e n deuxième mode de fonctionnement, le dispositif de transport de la balance réalise une marche arrière de la lettre concernée en amont à l'intérieur de la balance puis une marche avant de la lettre concernée en aval à l'intérieur de la balance.

6. Procédé selon la revendication 3 **caractérisé en ce qu'**en deuxième mode de fonctionnement, le dispositif de transport de la balance réalise une marche arrière de la lettre concernée en aval à l'intérieur de la balance à une vitesse constante.

7. Procédé selon la revendication 1 **caractérisé en ce que** le dispositif de commande de la balance dynamique effectue, en fonction de l'évaluation de la mesure du poids en premier mode de fonctionnement, une inversion dans un autre mode de fonctionnement, lequel provoque en aval le transport de l'objet postal vers l'autre station de traitement, si un pré-réglage correspondant du dispositif de commande de la balance dynamique permet, en cas de mesure inexacte, qu'une valeur de pesée plausible soit fixée à la place de la valeur de pesée réelle, la valeur de pesée plausible étant supérieure à la valeur de pesée réelle.

8. Disposition pour la réalisation du procédé selon la revendication 1 **caractérisée en ce que** chacun des capteurs d'entrée (S1) ou de sortie (S2) sont disposés en amont/en aval d'un plateau de pesée (6) et reliés au dispositif de commande (20) de la balance (10), le plateau de pesée (6) étant couplé de manière mécanique à une cellule de pesage (7) près de son centre de gravité, **en ce qu'**un capteur de vitesse (50) est relié au dispositif de commande (20), le moteur (49) étant relié au dispositif de commande (20) selon le dispositif de commande et entraînant la courroie de transport (41) via un rouleau entraîneur (485), ladite courroie de transport s'appuyant sur un dispositif d'appui (46, 47) dans la zone inférieure du plateau de pesée (6) près de la paroi de guidage inférieure (3), et **en ce que** ladite paroi de guidage inférieure (3) est formée dans la zone de sortie de la balance en tant qu'adaptateur pour la machine à affranchir.

9. Disposition selon la revendication 8 **caractérisée en ce que** la balance (10) comprend un dispositif de transport (4) pourvu d'un entraînement pouvant être inversé (49, 44, 485), et **en ce que** le dispositif de commande (20) comprend un dispositif d'inversion (26) monté entre l'entraînement et le dispositif de commande (20), ce qui permet qu'en deuxième mode de fonctionnement, la direction de transport de la balance (20) puisse être inversée.

10. Disposition selon la revendication 9 **caractérisée en ce que** le dispositif de transport (4) de la balance comprend un moteur électrique à courant continu (49), la direction de transport (4) dans la balance (10) pouvant être inversée en deuxième mode de fonctionnement par l'inversion des pôles de la tension d'impulsion continue appliquée au moteur (49).

11. Disposition selon la revendication 9 **caractérisée en ce que** le dispositif de transport de la balance comprend un engrenage (44) pourvu d'un moteur (49), la direction de transport de la balance pouvant être inversée en deuxième mode de fonctionnement par l'inversion de l'engrenage (44) lors de la tension de fonctionnement appliquée au moteur (49).

12. Disposition selon la revendication 8 **caractérisée en ce que** le dispositif de soutien est composé d'une plaque d'appui (46) disposée entre deux tôles porteuses (47), **en ce que** les tôles porteuses (47) sont fixées au plateau de pesée (6), et **en ce qu'**un dispositif de tension (48) pour un réglage défini de la tension de la courroie de transport (41) est fixé auxdites tôles porteuses (47) ladite courroie de transport étant formée de manière non-élastique pour une extension longitudinale.

13. Disposition selon la revendication 12 **caractérisée en ce que** le dispositif de tension (48) permet de régler la tension de courroie via des ressorts de traction ou autres moyens de tension.

14. Disposition selon l'une quelconque des revendications 8 à 13 **caractérisée en ce que** le dispositif de tension (48) pour un réglage défini de la tension de courroie comporte une poulie de tension (488) sur un axe de tension (487), dont les extrémités pour chacune des chevilles de guidage (481) sont perforées, **en ce que** sur chaque cheville de guidage (481) un ressort en spirale (482) est fixé et un écrou (483) est vissé, **en ce qu'**une tôle de butée (486) est fixée sur chaque tôle porteuse (47) et disposée entre l'écrou (483) et l'axe de tension (487), **en ce que** chacun des deux ressorts en spirale (482), qui s'appuient d'un coté à l'écrou (483) et de l'autre à la tôle de butée (486), sont précontraints par une compression, laquelle se transmet sur la poulie de tension (488).

15. Disposition selon la revendication 14 **caractérisée en ce que** la perforation de l'axe de tension (487) est formée de telle manière que les chevilles de guidage (481) sont montées avec leur élément d'assemblage par conformation (4811) de manière à résister à la torsion, **en ce qu'**une bague de sécurité (489) à l'extrémité de la cheville de guidage (481) empêche le glissement de la cheville de guidage (481) hors de la perforation de l'axe de tension (487).

16. Disposition selon la revendication 14 **caractérisée en ce que** les tôles porteuses (47) comportent des trous oblongs (471) à la hauteur de la poulie de tension (488), dans laquelle glisse l'axe de tension (487) si la courroie de transport (41) est précontrainte au moyen de la poulie de tension (488).

17. Disposition selon la revendication 8 **caractérisée en ce que** le rouleau entraîneur (485) qui entraîne la courroie de transport (41), est un pignon en aluminium sablé, **en ce que** la courroie de transport (41) est composée d'un tissu à extensibilité réduite avec un revêtement glissant en plastique, cette dernière s'appuyant au pignon en aluminium en raison de la tension de courroie avec un glissement prédéfini.

18. Disposition selon la revendication 8 **caractérisée en ce que** la paroi de guidage inférieure (3) dispose d'une extrémité arrière (32) de la largeur de la courroie de transport (41) laquelle a une longueur inférieure à la largeur de la courroie de transport (41) afin de minimiser le chemin de transport vers la machine à affranchir.

19. Disposition selon la revendication 8 **caractérisée en ce que** le plateau de pesée (6) comporte une paroi arrière pour le guidage de l'objet postal (A) et un dispositif de transport (4) pour l'objet postal (A) qui forme en même temps le fond du plateau de pesée (6).

20. Disposition selon la revendication 8 **caractérisée en ce que** le plateau de pesée (6) est accouplé à la cellule de pesage (7) à l'endroit approximatif du centre de gravité commun du plateau de pesée (6) et d'un objet postal (A) disposé de manière centrale sur le plateau de pesée (6) au poids et aux dimensions maximums autorisés.

21. Disposition selon la revendication 8 **caractérisée en ce que** le plateau de pesée (6) est réalisé selon un mode de construction légère rigide et résistante à la torsion, la paroi arrière du plateau de pesée (6) comportant une pièce d'introduction de force avec laquelle la paroi arrière du plateau de pesée (6) est fixée sur une extrémité libre de la cellule de pesage (7).

22. Disposition selon la revendication 21 **caractérisée en ce que** la paroi arrière du plateau de pesée (6) est réalisée de manière monobloc selon un mode de construction en sandwich.

23. Disposition selon la revendication 8 **caractérisée en ce que** le capteur de vitesse (50) est un encodeur couplé de manière mécanique à un moteur (49).
